# EUROPEAN PATENT APPLICATION

(11) **EP 3 481 089 A1**
(43) Date of publication of application: **08.05.2019**
(21) Application number: 17819361.1
(22) Date of filing: 30.06.2017
(51) Int. Cl.: H04W 8/18, H04W 48/20

(54) **METHOD AND SYSTEM FOR FILTERING OPERATOR ACCESS POINTS**

(30) Priority: 01.07.2016 CN 201610507697
(71) Applicant: Huizhou TCL Mobile Communication Co., Ltd., Huizhou, Guangdong 516006 (CN)
(72) Inventor: HUANG, Yan, HuiZhou Guangdong 516006 (CN); PENG, Xi, HuiZhou Guangdong 516006 (CN)
(74) Representative: Petraz, Gilberto Luigi
(86) International application number: PCT/CN2017/091223
(87) International publication number: WO 2018/001364

(57) **Abstract**

Disclosed in the present invention are a method and a system for filtering operator access points, the method comprising: preconfiguring access point parameters of a plurality of operators, the access point parameters comprising the mobile country code, the mobile network code and the operator name of each operator; identifying SIM card, filtering out, according to the mobile country code and the mobile network code of the SIM card, a matched operator names list from the access point parameters; selecting an operator name from the operator names list and saving same, filtering out, according to the selected operator name and the SIM card, an access point corresponding to the SIM card from the access point parameters. The problem of filtering the operator access points is effectively solved, and the risk of activation data connection failure is reduced.

## Description

### BACKGROUND OF THE DISCLOSURE

### 1. Field of the Disclosure

The present disclosure relates to the field of mobile terminal technology, and more particularly, to a method and system for filtering an access point of an operator.

### 2. Description of the Related Art

With popularity of smart terminals, demand for users to access the internet is particularly prominent and the importance of the data connection using a Subscriber Identification Module (SIM) card becomes self-evident. Access Point Name (APN) is a related kind of network access technology and is also a configuration parameter and a requirement for the successful activation of the data connection with a SIM card. Each operator has his own APN without using APN of others.

Instead of having physical networks, a number of foreign virtual operators or Mobile Virtual Network Operators (MVNO) rent networks from operators who truly own the physical networks now. The Mobile Country Code (MCC) and the Mobile Network Code (MNC) of the SIM card published by the virtual operators are the same as those used in the physical networks. Some virtual operators add a Service Provider Name (SPN), a Group identifier document (GID) and other information in the customized card document of their own SIM cards in order to be different from the SIM cards of physical operators, while others do not.

According to GOOGLE's original design, a corresponding APN is filtered through the requirement of the combination of the MCC and the MNC of a SIM card for common operators, and is filtered through the requirement of the combination of the MCC, the MNC, and the SPN or the GID for the virtual operators who have the customized card document including the SPN and the GID. Under such circumstances, a problem has emerged: an APN can only be filtered through the requirement of the combination of the MCC and the MNC for the virtual operators who are lack of the customized card document. The filtered APNs include not only the APN of the operator who only has the MCC and the MNC but also the APNs of the operators who have the same MCC, the same MNC and other information. Polling for all the APNs which satisfy the requirement is necessary when using an APN to activate a data connection, causing continuous failures and tries. Owing to the timeout of a data connection, failure in the activation of the data connection will result in poor user experience, reduction of connection efficiency, low accurate rates, and waste time.

Therefore, developments and improvements for the current technology are still needed.

### SUMMARY

An object of the present disclosure is to provide a method and system for filtering an access point of an operator to solve the foregoing deficiencies in the current technology such as low accurate rates and a waste of time for current operators.

The technical propose used in the present invention to solve the foregoing technical deficiencies is as follows:

A method for filtering an access point of an operator, including:
(A) presetting parameters of access points for a plurality of operators, wherein the parameters of the access points each comprise a Mobile Country Code (MCC), a Mobile Network Code (MNC) and an operator name;
(B) recognizing SIM cards and filtering a matched operator name list from the parameters of the access points based on the Mobile Country Codes and the Mobile Network Codes of the SIM cards; and
(C) selecting an operator name from the operator name list, reserving the selected operator name, and, based on a selected operator name and a corresponding SIM card, filtering an access point of the corresponding SIM card from the parameters of the access points.

According to the method for filtering an access point of an operator, step (A) includes:
(A1) presetting information of access points for all of virtual operators and generating corresponding access point documents through presetting virtual operator names in the information of access points for all of virtual operators; and
(A2) obtaining a corresponding access point database through introducing the access point documents into a database at the first boot or when resetting the access points for all of virtual operators.

According to the method for filtering an access point of an operator, step (B) includes:
(B1) when inserting and recognizing a SIM card to obtain the Mobile Country Code and the Mobile Network Code of the inserted SIM card, obtaining all of the access points which match the Mobile Country Code and the Mobile Network Code of the inserted SIM card through inquiring the access point database; and
(B2) generating a corresponding operator name list based on the operator names corresponding to all of the access points.

According to the method for filtering an access point of an operator, step (C) includes:
(C1) receiving and reserving the operator name selected by a user; and
(C2) obtaining the corresponding access point through inquiring the access point database based on the Mobile Country Code and the Mobile Network Code of the SIM card and the selected operator name, and generating a corresponding access point list.

According to the method for filtering an access point of an operator, the operator includes a telecommunications operator and/or a virtual operator.

A system for filtering an access point of an operator, including:
an access point configuring module configured for presetting parameters of access points for a plurality of operators, wherein the parameters of the access points each comprise a Mobile Country Code (MCC), a Mobile Network Code (MNC) and an operator name;
an operator name matching module configured for recognizing SIM cards and filtering a matched operator name list from the parameters of the access points based on the Mobile Country Codes and the Mobile Network Codes of the SIM cards; and
an access point filtering module configured for selecting an operator name from the operator name list, reserving the selected operator name, and, based on a selected operator name and a corresponding SIM card, filtering an access point of the corresponding SIM card from the parameters of the access points.

According to the system for filtering an access point of an operator, the access point configuring module includes:
a document generating unit configured for presetting an access point information for all of virtual operators and generating a corresponding access point document through presetting a virtual operator name in the access point information; and
a database generating unit configured for obtaining a corresponding access point database through introducing the access point document into a database at the first boot or when resetting the access point.

According to the system for filtering an access point of an operator, the operator name matching module includes:
an access point matching unit configured for inserting and recognizing the SIM card to obtain the Mobile Country Code and the Mobile Network Code of the SIM card, and obtaining all of the access points which match the Mobile Country Code and the Mobile Network Code of the SIM card through inquiring the access point database; and
an operator name generating unit configured for generating a corresponding operator name list based on the operator names corresponding to all of the access points.

According to the system for filtering an access point of an operator, the access point filtering module includes:
a selection reserving unit configured for receiving and reserving the operator name selected by a user; and
an access point list unit configured for obtaining the corresponding access point through inquiring the access point database based on the Mobile Country Code, the Mobile Network Code of the SIM card and the selected operator name, and generating a corresponding access point list.

According to the system for filtering an access point of an operator, the operator includes a telecommunications operator and/or a virtual operator.

A method and system, provided in the invention, for filtering an access point of an operator efficiently solve the problems of low accurate rates and a waste of time for current operators through the following steps: presetting parameters of access points for a plurality of operators, wherein the parameters of the access points each comprise a Mobile Country Code (MCC), a Mobile Network Code (MNC) and an operator name; recognizing SIM cards and filtering a matched operator name list from the parameters of the access points based on the Mobile Country Codes and the Mobile Network Codes of the SIM cards; and selecting an operator name from the operator name list, reserving the selected operator name, and, based on a selected operator name and a corresponding SIM card, filtering an access point of the corresponding SIM card from the parameters of the access points. The invention efficiently solves the problems of filtering access points for operators and reduces the risk of the failure of activating a data connection, which provides a good user experience. Furthermore, the invention provides an efficient solution of filtering an APN especially for the virtual operators having no customized card documents, and benefits users greatly.

### BRIEF DESCRIPTION OF THE DRAWINGS

FIG. 1 is a flow chart of a method for filtering an access point of an operator according to one preferred embodiment of the present invention.
FIG. 2 is a structural block diagram of a system for filtering an access point of an operator according to one preferred embodiment of the present invention.

### DETAILED DESCRIPTION OF THE EMBODIMENTS

A method and system for filtering an access point of an operator are provied in the invention. To ensure the objects, the technical solutions and the effects of the invention are clearer and more specific, explaining the invention with reference to accompanying drawings and embodiments in detail further below. It should be understood that the embodiments described herein are merely used to explain the invention and not used to limit the invention.

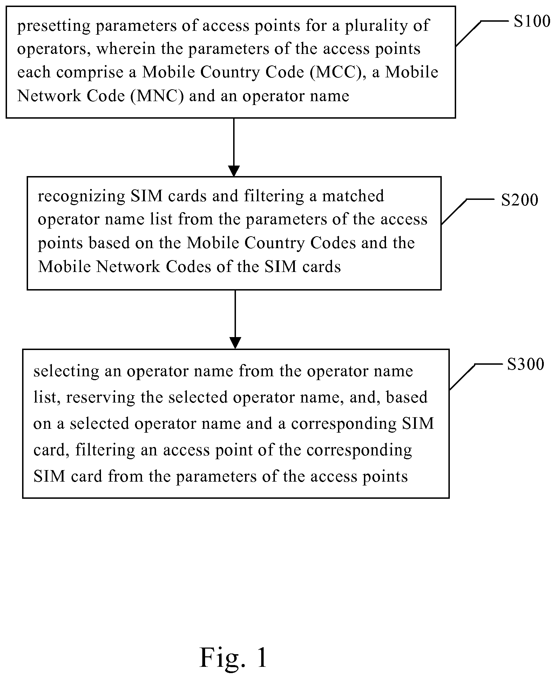

Please refer to FIG. 1, which is a flow chart of a method for filtering an access point of an operator according to one preferred embodiment of the present invention. As shown in FIG. 1, the method for filtering an access point of an operator includes the following steps:
Step S100: presetting parameters of access points for a plurality of operators, wherein the parameters of the access points each comprise a Mobile Country Code (MCC), a Mobile Network Code (MNC) and an operator name.
Step S200: recognizing SIM cards and filtering a matched operator name list from the parameters of the access points based on the Mobile Country Codes and the Mobile Network Codes of the SIM cards.
Step S300: selecting an operator name from the operator name list, reserving the selected operator name, and, based on a selected operator name and a corresponding SIM card, filtering an access point of the corresponding SIM card from the parameters of the access points.

Combining with an embodiment, describing the forgoing steps in detail as follows:

In the step S100, presetting parameters of access points for a plurality of operators, wherein the parameters of the access points each comprise a Mobile Country Code (MCC), a Mobile Network Code (MNC) and an operator name. Specifically, presetting information of access points for all of virtual operators and generating corresponding access point documents through presetting virtual operator names in the information of access points for all of virtual operators first, and then obtaining a corresponding access point database through introducing the access point documents into a database at the first boot or when resetting the access points for all of virtual operators. That is to say, generating the access point documents through storing the interrelation between the MCC, the MNC and the operator name which correspond to the access points. The technical proposal in the invention is more flexible just need to maintain the document having a configuring information of APN if adding a virtual operator or changing the names of virtual operators, without changing main codes.

In practical applications, the first thing to do is to configure an APN document, which means that the invention presets APNs which satisfy requirements for all the virtual operators, and presets operator names in the parameters of APN documents innovatively. Presetting all the APNs having a required Mobile Country Code (MCC) and a required Mobile Network Code (MNC) in access point documents, and presetting virtual operator names in the parameters of corresponding APN documents by setting two lists of parameters such as mvno_type="sim provider" and mvno_match_data="XXX". The next thing to do is to introduce the access point documents into a database, which means that the configured APN document is introduced into a support table of the database so that corresponding access point data are generated at the first boot or when resetting the APNs.

In the step S200, recognizing SIM cards and filtering a matched operator name list from the parameters of the access points based on the Mobile Country Codes and the Mobile Network Codes of the SIM cards. Specifically, the step S200 includes the following steps. Step S201: when inserting and recognizing a SIM card to obtain the Mobile Country Code and the Mobile Network Code of the inserted SIM card, obtaining all of the access points which match the Mobile Country Code and the Mobile Network Code of the inserted SIM card through inquiring the access point database. Step S202: generating a corresponding operator name list based on the operator names corresponding to all of the access points.

In practical applications, after inserting and recognizing a SIM card at a boot, determining whether there is a need to display a box and, if so, displaying a list box of virtual operators. Specifically, if the inserted SIM card is new, a list box of a SIM provider (i.e. SIM operator name) needs to be displayed; if not, it doesn't need to display the list box of a SIM provider because mobile terminals have recorded the operator name corresponding to the inserted SIM card. Then, proceeding to the step S201, obtaining all of the operator names which satisfy an MCC and an MNC through inquiring an APN database based on the MCC and the MNC of the SIM cards, and generating a corresponding operator name list. Users are able to select by the list box of a SIM provider displayed in mobile terminals. In practical applications, when inserting and recognizing a SIM card to obtain the MCC and the MNC of the inserted SIM card, obtaining all of the APNs, which match the MCC and the MNC, and the mvno_match_data parameters of the APNs through inquiring the access point database at the first time.

In the step S300, selecting an operator name from the operator name list, reserving the selected operator name, and, based on a selected operator name and a corresponding SIM card, filtering an access point of the corresponding SIM card from the parameters of the access points. Specifically, receiving and reserving the operator name selected by a user first, and then obtaining the corresponding access point through inquiring the access point database based on the Mobile Country Code and the Mobile Network Code of the SIM card and the selected operator name, and generating a corresponding access point list.

In practical applications, selecting a virtual operator by a user and reserving the operator name selected by the user. In general, the user knows the operator to whom the user's SIM card belongs, and thus uses a priori information of the user's SIM card to select an operator name and reserve the selected operator name as a holistic variable. After selecting by the user, using the reserved operator name, combining with the MCC and the MNC of the user's SIM card, to inquire the access point database so that an APN corresponding to the user's SIM card is filtered. Afterwards, entering an APN display list and displaying the corresponding APN. When activating a data connection in a frameworks layer using an APN, the forgoing steps are also executed because the functions of displaying in an interface and activating a data connection are separate. In practical applications, when inquiring the access point database for the second time, the filtering process can be realized through polling, using the reserved operator name, for the mvno_match_data parameters of all the APNs, which have a parameter of operator name in advance and satisfy the requirements of the MCC and the MNC. Finally, a mobile terminal can get a corresponding APN filtered in a data connection.

In practical applications, the operator includes a telecommunications operator and/or a virtual operator. The invention provides a solution of filtering an APN especially for the virtual operators having no customized card documents, which resulted in high efficiency and short time consuming. Before using the technical solution of the invention, a filtered APN list includes a number of APNs because an operator may have only one APN or several APNs. The filtered APNs, prior to use the technical solution of the invention, include all the APNs of physical operators and virtual operators having a same combination of an MCC and an MNC. However, the APN list filtered through the method of the invention only has an APN corresponding to the operator who is inserting a SIM card, which efficiently solves the problems of filtering access points for virtual operators, reduces the risk of the failure of activating a data connection, and provides a good user experience. The invention reduces the risk of the failure of activating a data connection without adding any cost of hardware, which provides a good and new user experience for all the smart terminals based on the android system.

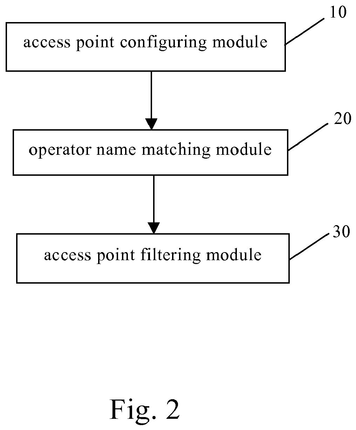

Based on the forgoing method for filtering an access point of an operator, the invention further provides a system for filtering an access point of an operator. As shown in FIG. 2, the system includes:
An access point configuring module 10 configured for, as specifically stated in the step S100, presetting parameters of access points for a plurality of operators, wherein the parameters of the access points each comprise a Mobile Country Code (MCC), a Mobile Network Code (MNC) and an operator name.

An operator name matching module 20 configured for, as specifically stated in the step S200, recognizing SIM cards and filtering a matched operator name list from the parameters of the access points based on the Mobile Country Codes and the Mobile Network Codes of the SIM cards.

An access point filtering module 30 configured for, as specifically stated in the step S300, selecting an operator name from the operator name list, reserving the selected operator name, and, based on a selected operator name and a corresponding SIM card, filtering an access point of the corresponding SIM card from the parameters of the access points.

Further, the access point configuring module 10 includes:
a document generating unit configured for presetting information of access points for all of virtual operators and generating corresponding access point documents through presetting virtual operator names in the information of access points for all of virtual operators; and
a database generating unit configured for obtaining a corresponding access point database through introducing the access point documents into a database at the first boot or when resetting the access points for all of virtual operators.

Further, the operator name matching module 20 includes:
an access point matching unit configured for obtaining all of the access points which match the Mobile Country Code and the Mobile Network Code of a SIM card through inquiring the access point database when inserting and recognizing the SIM card to obtain the Mobile Country Code and the Mobile Network Code of the inserted SIM card; and
an operator name generating unit configured for generating a corresponding operator name list based on the operator names corresponding to all of the access points.

Further, the access point filtering module 30 includes:
a selection reserving unit configured for receiving and reserving the operator name selected by a user; and
an access point list unit configured for obtaining the corresponding access point through inquiring the access point database based on the Mobile Country Code and the Mobile Network Code of the SIM card and the selected operator name, and generating a corresponding access point list.

Further, the operator includes a telecommunications operator and/or a virtual operator.

The forgoing system for filtering is installed in mobile terminals, causing the mobile terminals to be capable of filtering with an APN, and thus improving the connection efficiency of the mobile terminals. Being explained in detail in the forgoing embodiments, the concrete principles and the technical features of the method of filtering for the mobile terminals are not repeated here.

In conclusion, a method and system, provided in the invention, for filtering an access point of an operator includes the following steps: presetting parameters of access points for a plurality of operators, wherein the parameters of the access points each comprise a Mobile Country Code (MCC), a Mobile Network Code (MNC) and an operator name; recognizing SIM cards and filtering a matched operator name list from the parameters of the access points based on the Mobile Country Codes and the Mobile Network Codes of the SIM cards; and selecting an operator name from the operator name list, reserving the selected operator name, and, based on a selected operator name and a corresponding SIM card, filtering an access point of the corresponding SIM card from the parameters of the access points. The invention efficiently solves the problems of filtering APNs for operators and reduces the risk of the failure of activating a data connection, which resulted in a good user experience, high efficiency, short time consuming and great benefits.

The division of the foregoing functional modules is merely used to be an example for explaining. In practical applications, the allocation of the foregoing functions can be finalized through different functional modules as required, which means that the functions can be divided into different functional modules in order to finalize parts or all of the functions described above.

A person of ordinary skill in the art is able to understand that parts or all of the processes of the method according to the foregoing embodiments can be finalized through related hardware instructed by procedures of a computer or a mobile terminal. The procedures of a computer or a mobile terminal can be stored in a readable storage medium of a computer or a mobile terminal, wherein the storage medium can be a magnetic disk, an optical disk, a Read-Only Memory (ROM) or a Random Access Memory (RAM), etc. Being executed, the procedures can include the processes of the method according to each of the foregoing embodiments.

It should be understood that the application of the present invention is not limited by the foregoing examples. A person of ordinary skill in the art is able to make modifications or changes based on the foregoing description, and all of these modifications and changes are within the scope of the appended claims of the present invention.

## Claims

1. A method for filtering an access point of an operator, comprising:
(A) presetting parameters of access points for a plurality of operators, wherein the parameters of the access points each comprise a Mobile Country Code (MCC), a Mobile Network Code (MNC) and an operator name;
(B) recognizing SIM cards and filtering a matched operator name list from the parameters of the access points based on the Mobile Country Codes and the Mobile Network Codes of the SIM cards; and
(C) selecting an operator name from the operator name list, reserving the selected operator name, and, based on a selected operator name and a corresponding SIM card, filtering an access point of the corresponding SIM card from the parameters of the access points.

2. The method according to claim 1, wherein step (A) comprises:
(A1) presetting information of access points for all of virtual operators and generating corresponding access point documents through presetting virtual operator names in the information of access points for all of virtual operators; and
(A2) obtaining a corresponding access point database through introducing the access point documents into a database at the first boot or when resetting the access points for all of virtual operators.

3. The method according to claim 2, wherein step (B) comprises:
(B1) when inserting and recognizing a SIM card to obtain the Mobile Country Code and the Mobile Network Code of the inserted SIM card, obtaining all of the access points which match the Mobile Country Code and the Mobile Network Code of the inserted SIM card through inquiring the access point database; and
(B2) generating a corresponding operator name list based on the operator names corresponding to all of the access points.

4. The method according to claim 3, wherein step (C) comprises:
(C1) receiving and reserving the operator name selected by a user; and
(C2) obtaining the corresponding access point through inquiring the access point database based on the Mobile Country Code and the Mobile Network Code of the SIM card and the selected operator name, and generating a corresponding access point list.

5. The method according to any one of the claims 1 to 4, wherein the operator comprises a telecommunications operator and/or a virtual operator.

6. A system for filtering an access point of an operator, comprising:
an access point configuring module configured for presetting parameters of access points for a plurality of operators, wherein the parameters of the access points each comprise a Mobile Country Code (MCC), a Mobile Network Code (MNC) and an operator name;
an operator name matching module configured for recognizing SIM cards and filtering a matched operator name list from the parameters of the access points based on the Mobile Country Codes and the Mobile Network Codes of the SIM cards; and
an access point filtering module configured for selecting an operator name from the operator name list, reserving the selected operator name, and, based on a selected operator name and a corresponding SIM card, filtering an access point of the corresponding SIM card from the parameters of the access points.

7. The system according to claim 6, wherein the access point configuring module comprises:
a document generating unit configured for presetting information of access points for all of virtual operators and generating corresponding access point documents through presetting virtual operator names in the information of access points for all of virtual operators; and
a database generating unit configured for obtaining a corresponding access point database through introducing the access point documents into a database at the first boot or when resetting the access points for all of virtual operators.

8. The system according to claim 7, wherein the operator name matching module comprises:
an access point matching unit configured for obtaining all of the access points which match the Mobile Country Code and the Mobile Network Code of a SIM card through inquiring the access point database when inserting and recognizing the SIM card to obtain the Mobile Country Code and the Mobile Network Code of the inserted SIM card; and
an operator name generating unit configured for generating a corresponding operator name list based on the operator names corresponding to all of the access points.

9. The system according to claim 8, wherein the access point filtering module comprises:
a selection reserving unit configured for receiving and reserving the operator name selected by a user; and
an access point list unit configured for obtaining the corresponding access point through inquiring the access point database based on the Mobile Country Code and the Mobile Network Code of the SIM card and the selected operator name, and generating a corresponding access point list.

10. The system according to any one of the claims 6 to 9, wherein the operator comprises a telecommunications operator and/or a virtual operator.
